# EUROPÄISCHE PATENTSCHRIFT

(11) **EP 2 383 058 B1**
(45) Veröffentlichungstag und Bekanntmachung des Hinweises auf die Patenterteilung: **03.04.2013**
(21) Anmeldenummer: 10161101.0
(22) Anmeldetag: 27.04.2010
(51) Int. Cl.: B23B 31/167, B23Q 3/18

(54) **Kraftbetätigtes Spannfutter**
Power-activated chuck
Mandrin actionné par la force

(43) Veröffentlichungstag der Anmeldung: 02.11.2011
(73) Patentinhaber: SMW-AUTOBLOK Spannsysteme GmbH, 88074 Meckenbeuren (DE)
(72) Erfinder: Helm, Peter, 88074, Meckenbeuren (DE)
(74) Vertreter: Engelhardt & Engelhardt

(56) Entgegenhaltungen:
- EP-A2- 0 069 917
- EP-A2- 0 085 782
- WO-A2-2007/143976
- JP-A- 6 114 604
- JP-A- 61 146 404
- US-A- 3 142 491
- US-A- 3 491 996

## Beschreibung

Die Erfindung bezieht sich auf ein kraftbetätigtes Spannfutter nach dem Oberbegriff des Patentanspruches 1.

Solche kraftbetätigten Spannfutter sind beispielsweise aus der EP 0069917 oder der EP 0085782 zu entnehmen. Diese kraftbetätigten Spannfutter sind von der Patentanmelderin entwickelt worden und werden von dieser seit Jahrzehnten erfolgreich vermarktet. Diese Spannfutter haben sich in der Praxis bewährt.

Insbesondere in der EP 0085782 ist ersichtlich, dass jeder der Spannbacken einen zur Einspannung von ungleichmäßigen Werkstücken geeigneten Ausgleichsspannbackensatz aufweist, der unabhängig von dem eigentlichen Spannbackensatz radial zustellbar ist. Sowohl der Spannbackensatz als auch die Zentrierspannbacken sind durch die Keilstangen betätigbar.

Die von der Patentanmelderin entwickelten und vertriebenen Spannfutter weisen ein technisches Defizit auf. Wenn nämlich Werkstücke zuverlässig gehalten werden sollen, die ein äußerst groß bemessenes Eigengewicht und einen Außendurchmesser von mehr als 0,5 Meter aufweisen, sind die bekannten Spannfutter nicht einsetzbar, da solche Werkstücke nicht exakt zentrierbar sind. Derartige Werkstücke sollen beispielsweise als Läufer in groß bauenden Elektromotoren verwendet werden. Diese Läufer und andere rotationssymetrische Werkstücke sind als Präzisionsbauteile herzustellen. Bereits während der umfangreichen spanabhebenden Bearbeitung von solchen Werkstücken ist es daher erforderlich, dass diese möglichst exakt koaxial oder zentrisch zu dem Spannfutter einzuspannen sind. Dies bedeutet, dass die Längsachse der einzuspannenden Werkstücke fluchtend zu der Längsachse des Spannfutters auszurichten ist.

Die bekannten Spannfutter ermöglichen zwar bei klein bauenden Werkstücken, dass das vorhandene Spiel, das zwischen dem als Kolben ausgebildeten Betätigungselement, der in dem Grundkörper des Spannfutters axial verschieblich gelagert ist, und dem Grundkörper vorhanden ist, ausgleichbar ist. Je größer jedoch der Außenumfang des Betätigungselementes baut, desto größer ist betragsmäßig das vorhandene Spiel zwischen dem Betätigungselement, insbesondere zwischen dem Kolben und dem Innendurchmesser des Grundkörpers. Solche Fehlertoleranzen lassen sich herstellungsbedingt nicht ausschließen.

Diese Lagerspiele sind als Ungenauigkeiten bei der Einspannung des Werkstückes nicht auszugleichen, sondern diese Ungenauigkeiten übertragen sich auf die Einspannsituation des Werkstückes. Also zwischen der Position des Werkstückes und dem Zentrum des Spannfutters entsteht eine Ungenauigkeit. Bei der nachfolgenden Bearbeitung der Werkstücke sind diese vorhandenen Ungenauigkeiten nicht ausgleichbar, so dass auch bei dem Endzustand des bearbeiteten Werkstückes Fehlertoleranzen vorhanden sind, die jedoch bei hoch präzisen Bauteilen vermieden werden sollen.

Als weiterer Nachteil bei den bekannt gewordenen Spannfuttern hat sich herausgestellt, dass während des oftmals langwierigen und erheblichen Bearbeitungsprozesses Einspannfehler entstehen, denn das bearbeitete Werkstück wird während des Bearbeitungsprozesses leichter, da das Material von diesem abgenommen ist. Solche spanabhebenden Material reduzierenden Arbeitsvorgänge führen dann dazu, dass die ursprüngliche Position des Werkstückes gegenüber dem Spannfutter und damit gegenüber der Werkzeugmaschine verändert ist.

Da die eingespannten Werkstücke durch die Werkzeugmaschine zu deren Bearbeitung in Rotation versetzt sind, ist es bei einem Spannfutter, das drei in 120° Winkelstellung zueinander beabstandete Spannbacken aufweist, insbesondere bei äußerst schwer bauenden Werkstücken von beispielsweise 20 Tonnen Eigengewicht, festgestellt worden, dass eine der Spannbacken, die zeitweise in einer bestimmten Winkelposition des Spannfutters angeordnet ist, ausschließlich die Gewichtskraft des Werkstückes zu tragen hat, so dass solche Spannfutter extrem stabil auszulegen bzw. zu dimensionieren sind, denn die durch die Gewichtskraft des Werkstückes auftretenden Spannkräfte sind von der einzelnen Spannbacke aufzunehmen.

Es ist daher Aufgabe der Erfindung, ein kraftbetätigtes Spannfutter der eingangs genannten Gattung zur Verfügung zu stellen, durch das zum Einen eine exakte zentrische Positionierung des einzuspannenden Werkstückes bezogen auf die Längsachse des Spannfutters und durch das zum Anderen eine während des Bearbeitungsprozesses permanent vorzunehmende Zentriereinstellmöglichkeit gegeben ist. Darüber hinaus soll durch das erfindungsgemäße Spannfutter eine zuverlässige und dauerhafte Abstützung auch von äußerst schweren Werkstücken mit einem Innen- oder Außendurchmesser von mindestens 0,5 Meter möglich sein. Ferner soll die Anzahl der Spannbacken auf ein Minimum, vorzugsweise auf zwei oder drei Spannbacken, reduzierbar sein.

Diese Aufgaben sind erfindungsgemäß durch die Merkmale des kennzeichnenden Teils von Patentanspruch 1 is Kombination mit den Merkmalen des Oberbegriffs dieses Anspruchs gelöst.

Weitere vorteilhafte Weiterbildungen der Erfindung ergeben sich aus den Unteransprüchen.

Dadurch, dass seitlich neben den Spannbacken mindestens eine Zentriereinrichtung vorgesehen ist, die eine radial auf das Werkstück gerichtete Zentrierkraft aufbringt, ist das Werkstück, nachdem dieses in den drei Spannbacken eingespannt ist, exakt zentrierbar, denn durch die jeweilige Zentriereinrichtung ist die Längsachse des Werkstückes fluchtend zu der Längsachse des Spannfutters positionierbar, ohne dass die Zentrierkraft auf die Spannbacken einwirkt. Die Spannbacken sind nämlich über die Keilstange kraftschlüssig mit der Betätigungseinrichtung, insbesondere mit dem Kolben, verbunden. Da jedoch der Kolben in dem Grundkörper des Spannfutters mit einem herstellungsbedingten Spiel gelagert ist, ist dieses Spiel durch die jeweilige Zentriereinrichtung ausgleichbar. Folglich wirkt die Zentrierkraft der jeweiligen Zentriereinrichtung nicht auf die Spannbacken und damit auf die Keilstange, die Betätigungseinrichtung und das Spannfutter ein, sondern gleicht vielmehr das vorhandene Lager-Spiel bzw. die Fehlertoleranzen, die insbesondere bei äußerst groß bemessenen Außendurchmessern etwa im Bereich von 5 µm liegen, aus. Diese für Präzisionsbauteile erheblichen Fehlertoleranzen können demnach durch die Zentriereinrichtungen derart ausgeglichen sein, dass die Werkzeugstücke in dem Spannfutter exakt zentrisch zu diesem eingebaut werden können.

Die vorhandenen Fehlertoleranzen des Spannfutters werden somit nicht mehr während des Bearbeitungsprozesses auf das Werkstück übertragen, sondern sind ausgeglichen.

Da während des Bearbeitungsprozesses von dem Werkstück mitunter die Hälfte des vorhandenen Materiales und damit die Hälfte an Eigengewicht spanabhebend abgetragen ist, reduziert sich das Eigengewicht des Werkstückes im Verlauf des Bearbeitungsprozesses, so dass dadurch auch die geometrischen Einspannverhältnisse beeinflusst sind. Da die Zentriereinrichtungen unabhängig von den Spannbacken bewegbar sind, können solche Veränderungen der Einspannverhältnisse durch die Zentriereinrichtungen während des Bearbeitungsprozesses ausgeglichen sein, so dass das eingespannte Werkstück permanent exakt zentrisch zu dem Spannfutter positionierbar ist, ohne die von den Spannbacken aufgebrachte Spannkraft zu verändern.

Darüber hinaus wirkt die Zentriereinrichtung auf die Oberfläche des eingespannten Werkstückes, so dass das Werkstück nicht nur durch die Spannbacken, sondern auch durch die Zentriereinrichtungen am Grundkörper des Spannfutters abgestützt ist.

Es ist besonders vorteilhaft, wenn drei Spannbacken in einem Winkel von 120° zueinander und zwischen zwei benachbarten Spannbacken jeweils eine der Zentriereinrichtungen angeordnet ist. Diese Konstruktion bewirkt nämlich, dass auf das Werkstück sechs in einem Winkel von 60° zueinander verlaufenden Spannbacken und Zentriereinrichtungen einwirken, so dass das Werkstück sowohl durch die Spannbacken als auch durch die Zentriereinrichtungen zuverlässig an dem Spannfutter abgestützt ist.

Die Zentriereinrichtungen können unterschiedlich konstruktiv ausgestaltet sein. Beispielhaft, jedoch nicht ausschließlich, sind die Zentriereinrichtungen als Keile oder als hydraulisch betätigbare Spannstifte oder als Gewindespindeln ausgestaltet. Gemeinsam ist diesen Zentriereinrichtungen, dass eine radial gerichtete Zentrierkraft auf die Oberfläche des Werkstückes einwirkt und durch diese Zentrierkraft eine Verschiebbung des Werkstückes und damit der Längsachse des Werkstückes bezogen auf die Längsachse des Spannfutters ermöglicht ist.

Darüber hinaus können die Zentriereinrichtungen synchron gemeinsam oder unabhängig voneinander betätigt sein, so dass in Abhängigkeit von der Einspannsituation, die von den Spannbacken erreicht ist, eine exakte Ausrichtung des Werkstückes durch die eine oder durch mehrere der Zentriereinrichtungen erfolgt.

Aufgrund dieser Einstellmöglichkeiten ist erreicht, dass die Position des Werkstückes an die Materialreduzierung und damit an die durch die Verringerung der Gewichtskraft hervorgerufene Lageänderung des Werkstückes bezogen auf den Mittelpunkt des Spannfutters durch die Zentriereinrichtungen erneut ausgerichtet werden kann. Folglich ist das Werkstück auch während des Bearbeitungsprozesses permanent exakt zentrisch zu dem Spannfutter positioniert; ein Aus- und Einspannen des Werkstückes ist nicht erforderlich, denn das Werkstück ist durch die Spannbacken des Spannfutters während der Bearbeitungsprozesse permanent gehalten. Lediglich die Zentriereinrichtungen sind zur erneuten exakten zentrischen Positionierung des Werkstückes zu betätigen.

In der Zeichnung sind zwei erfindungsgemäße Ausführungsbeispiele eines Spannfutters mit drei unterschiedlich ausgestalteten Zentriereinrichtungen dargestellt, die nachfolgend näher erläutert sind. Im Einzelnen zeigt:
- Figur 1: ein erstes Ausführungsbeispiel eines Spannfutters mit drei Spannbacken und drei seitlich versetzt zu den Spannbacken angeordneten schematisch dargestellten Zentriereinrichtungen, in Draufsicht,
- Figur 2: das Spannfutter gemäß Figur 1 entlang der Schnittlinie II-II,
- Figur 3: das Spannfutter gemäß Figur 2 entlang der Schnittlinie III-III,
- Figur 4a: eine erste Ausführungsvariante einer Zentriereinrichtung gemäß Figur 1, im Schnitt,
- Figur 4b: eine zweite Ausführungsvariante einer Zentriereinrichtung gemäß Figur 1, im Schnitt,
- Figur 4c: eine dritte Ausführungsvariante einer Zentriereinrichtung gemäß Figur 1, im Schnitt und
- Figur 5: ein zweites Ausführungsbeispiel eines Spannfutters mit drei Spannbacken und drei seitlich versetzt zu den Spannbacken angeordneten schematisch dargestellten Zentriereinrichtungen, im Schnitt.

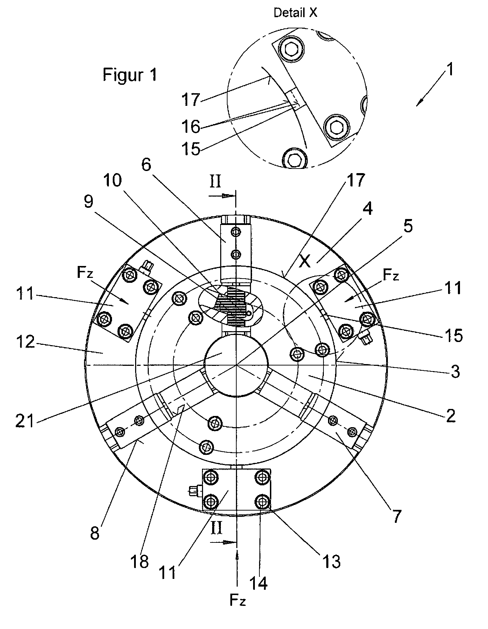

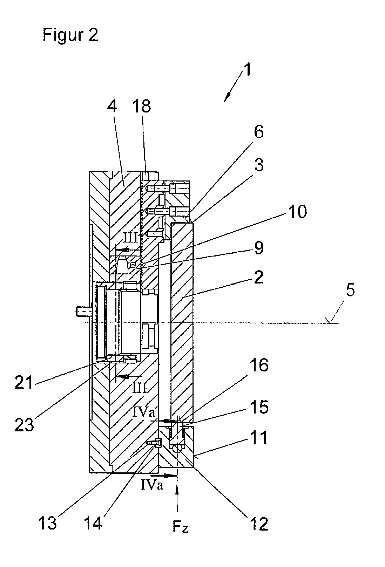

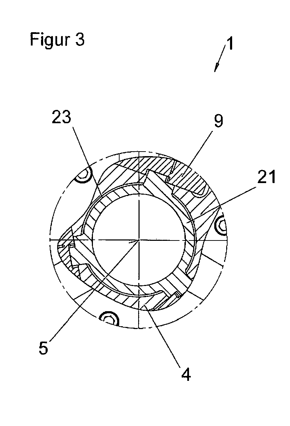

In den Figuren 1, 2 und 3 ist ein Spannfutter 1 abgebildet, durch das ein rotationssymetrisches vorzugsweise rundes Werkstück 2 an einer nicht dargestellten Werkzeugmaschine zu dessen spanabhebender Bearbeitung von außen gehalten ist. Das Spannfutter 1 besteht aus einem Grundkörper 4, dessen Längsachse mit der Bezugsziffer 5 versehen ist. In auf die Längsachse 5 gerichteten Führungsnuten 18 sind drei Spannbacken 6, 7 und 8 radial verschieblich gelagert. Die Spannbacken 6, 7 und 8 werden jeweils über eine Keilstange 9, die in dem Grundkörper 4 in üblicher Weise bewegbar angeordnet ist, angetrieben. Zwischen jeder der Keilstangen 9 und der Spannbacken 6, 7 oder 8 ist eine Verzahnung 10 vorgesehen, so dass zwischen jeder der Spannbacken 6, 7 oder 8 und der jeweiligen Keilstange 9 eine kraftschlüssige Wirkverbindung besteht. Jede der Keilstangen 5, dies kann insbesondere Figur 3 entnommen sein, ist über ein Betätigungselement 21 antreibbar. Das Betätigungselement 21 ist üblicherweise als Kolben ausgebildet, der koaxial zu der Längsachse 5 in dem Grundkörper 4 axial verschiebbar gelagert ist. Sobald das Betätigungselement 21 mit Kraft, die in Richtung der Längsachse 5 des Grundkörpers wirkt, beaufschlagt ist, entsteht eine Verschiebung der Keilstange 9, so dass über die schräg verlaufenden Verzahnungen 10 die Spannbacken 6, 7 und 8 synchron radial in den Führungsnuten 18 auf das Werkstück 2 zugestellt oder von diesem wegbewegt sind.

Durch die Spannbacken 6, 7 und 8 ist somit das Werkstück 2 an dem Spannfutter 1 drehfest gehalten.

Das rotationssymetrische Werkstück 2 weist eine Längsachse auf, die möglichst konzentrisch zu der Längsachse 5 während des gesamten Bearbeitungsprozesses des Werkstückes 2 angeordnet sein soll. Aufgrund des in Figur 3 schematisch dargestellten Spiels 23 zwischen dem Grundkörper 4 und dem Betätigungselement 21 kann jedoch oftmals eine solche gewünschte konzentrische oder koaxiale Einspannung des Werkstückes 2 an dem Spannfutter 1 nicht erreicht werden. Insbesondere bei äußerst groß bemessenen Werkstücken 2, die einen Außendurchmesser von mehr als 0,5 Meter und ein Eigengewicht von mehr als fünf Tonnen aufweisen, sind die herstellungsbedingten Fehlertoleranzen nicht auszugleichen, so dass das Spiel 23 zwischen dem Grundkörper 4 und dem Betätigungselement 21 entsteht. Dieses vorhandene Spiel 23 führt bei der Zustellung der Spannbacken 6, 7 und 8 dazu, dass die Längsachse des Werkstückes 2 nicht fluchtend oder koaxial zu der Längsachse 5 des Grundkörpers 4 angeordnet werden kann.

Wenn jedoch nunmehr das Werkstück 2 bearbeitet werden soll, führt dieser Fehler bei der Einspannung des Werkstückes 2 zu Bearbeitungsfehlern an dem Werkstück 2. Insbesondere für Präzisionsteile, beispielsweise Läufer oder Wellen in Elektromotoren oder sonstigen hochwertigen Maschinen, Anlagen oder dgl., sind jedoch solche Fehlertoleranzen nicht tolerierbar. Die bekannten Fehlertoleranzen führen beispielsweise zu einem Spiel 23 von mindestens 5 µm. Das vorhandene Spiel 23 von 5 µm wird demnach auf die Einspannsituation des Werkstückes 2 an dem Spannfutter 1 übertragen, so dass bei der Bearbeitung des Werkstückes 2 diese Fehlertoleranzen aufgrund der vorherrschenden Einbausituation gleichfalls auftreten.

Darüber hinaus wird während des spanabhebenden Bearbeitungsprozesses an dem Werkstück 2 Material von diesem abgenommen, so dass sich die Eigengewichtskraft des Werkstückes 2 während des Bearbeitungsprozesses ständig verringert. Diese Material reduzierende Bearbeitung führt somit dazu, dass die geometrischen Einspannsituationen verändert sind.

Um sowohl die exakte Position des Werkstückes, nämlich zentrisch, fluchtend oder koaxial zu der Längsachse 5 des Spannfutters 1 einstellen zu können, sind drei Zentriereinrichtungen 11 vorgesehen, durch die eine radial wirkende Zentrierkraft F_{z} auf das Werkstück 2 einwirkt, um durch diese das vorhandene Spiel 23 auszugleichen. Die Zentrierkraft F_{z} soll demnach nicht auf die Spannbacken 6, 7 oder 8 einwirken, sondern ausschließlich das vorhandene Spiel 23 ausgleichen und das Werkstück 2 derart zu der Längsachse 5 ausrichten, dass die Längsachse des Werkstückes 2 fluchtend oder koaxial zu der Längsachse 5 des Spannfutters 1 verläuft. Beispielsweise mittels elektrischen Sensoren oder sonstigen Berührungsgebern kann festgestellt sein, dass die Zentriereinrichtungen 11 das Werkstück 2 in der gewünschten Einspannsituation fixieren und die jeweilige Zentriereinrichtung 11 festgestellt ist.

Die Zentriereinrichtung 11 besteht aus einem Gehäuse 12, das lösbar an dem Grundkörper 4 des Spannfutters 1 anbringbar ist. Zu diesem Zweck sind in den Grundkörper 4 eine Vielzahl von Bohrungen 13 eingearbeitet und in dem Gehäuse 12 sind Durchgangsöffnungen vorgesehen, die von Schrauben 14 durchgriffen sind, um das Gehäuse 12 an dem Grundkörper 4 anzuschrauben. In dem Gehäuse 12 ist des Weiteren ein Zentrierstift 15 eingesetzt, der aus dem Gehäuse 12 absteht und eine Zentrierfläche 16 aufweist.

Die Gehäuse 12 der drei Zentriereinrichtungen 11 sind derart an dem Grundkörper 4 anzuordnen, dass die Zentrierflächen 16 der jeweiligen Zentrierstifte 15 auf einer gemeinsamen Kreisbahn 17 verlaufen, die etwas größer bemessen ist als der Au-βenradius des zu bearbeitenden Werkstückes 2. Die Spannbacken 6, 7 und 8 sind zunächst dazu vorgesehen, das Werkstück 2 aufzunehmen und dieses an dem Spannfutter 1 zu fixieren. Sobald die Einspannung des Werkstückes 2 durch die Spannbacken 6, 7 und 8 in bekannter Weise bewerkstelligt ist, sind die Zentrierstifte 15 der jeweiligen Zentriereinrichtung 11 radial auf das Werkstück 2 zu zu stellen.

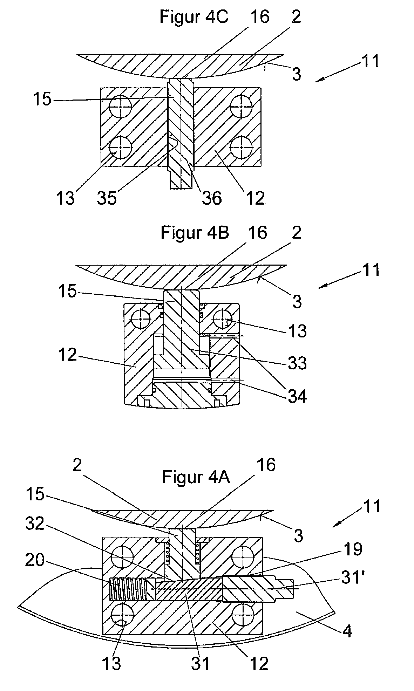

In den Figuren 4a, 4b und 4c sind drei unterschiedliche konstruktive Ausgestaltungen der jeweiligen Zentriereinrichtung 11 abgebildet.

In Figur 4a ist in dem Gehäuse 12 der Zentriereinrichtung 11 ein Keil 31 eingesetzt, der eine sich verjüngende Spannfläche 32 aufweist. Der Zentrierstift 15 liegt auf der Spannfläche 32 des Keils 31 an, so dass beim Einschieben des Keiles 31 die bereits erläuterte radial wirkende Zentrierkraft F_{z} entsteht, durch die der Zentrierstift 15 in Richtung auf das Werkstück 2 zugestellt und dieses mit der Zentrierkraft beaufschlagt ist. Der Keil 31 wird durch einen in das Gehäuse 12 eindrehbaren Bolzen 31' gegen die Kraft einer Feder 20 gedrückt. In einem in das Gehäuse 12 eingearbeitenden Spanngewinde 19 ist der Bolzen 31' gehalten, so dass beim Herausdrehen des Bolzens 31' eine Rückstellkraft durch die Feder 20 auf den Keil 31 aufgebracht ist, durch die der Keil 31 aus dem Gehäuse 12 herausgedrückt ist. Auch zwischen dem Gehäuse 12 und dem Zentrierstift 15 ist eine Feder vorgesehen, durch die der Zentrierstift 15 beim Lösen des Keils 31 in seine Ausgangsstellung zurückbewegt ist.

Aus Figur 4b ist ersichtlich, dass die Zentriereinrichtung 11 aus einem Hydraulikkolben 33 gebildet ist, an dem der Zentrierstift 15 angeformt ist. Über zwei Hydraulikanschlüsse 34 werden die beiden Räume, die von dem Hydraulikkolben 33 getrennt sind, mit Hydraulikflüssigkeit gefüllt bzw. wechselweise dazu entleert, so dass der Hydraulikkolben 33 über die Hydraulikanschlüsse 34 mit der radial wirkenden Zentrierkraft F_{z} beaufschlagt ist, durch die der Zentrierstift 15 in Richtung auf das Werkstück 2 zugestellt bzw. wegbewegbar ist.

In Figur 4c ist die konstruktive Ausgestaltung der Zentriereinrichtung 11 derart vorgenommen, dass in einem in dem Gehäuse 12 eingearbeiteten Innengewinde 35 eine Gewindespindel 36 eingeschraubt ist, an die der Zentrierstift 15 angeformt ist. Durch Eindrehen der Gewindespindel 36 wird demnach der Zentrierstift 15 in Richtung auf das Werkstück 2 zugestellt.

Den drei konstruktiven Ausgestaltungen der Zentriereinrichtung 11 nach den Figuren 4a, 4b, 4c ist demnach gemeinsam, dass die an dem Zentrierstift 15 vorgesehene Zentrierfläche 16 aus der Ausgangslage, die der Kreisbahn 17 entspricht, in Richtung auf das Werkstück 2 zugestellt ist und durch die Zentrierfläche 16 eine radial von au-βen und innen wirkende Zentrierkraft F_{z} auf das Werkstück 2 ausgeübt ist. Während der Zustellung des jeweiligen Zentrierstiftes 15 ist das Werkstück 2 durch die drei Spannbacken 6, 7 und 8 an dem Spannfutter 1 und demnach an der nicht dargestellten Werkzeugmaschine gehalten. Das zwischen dem Grundkörper 4 und dem Betätigungselement 21 vorhandene Spiel 23 kann folglich durch die Bewegungen des jeweiligen Zentrierstiftes 15 ausgeglichen sein. Die Zentrierstifte 15 der jeweiligen Zentriereinrichtung 11 können unabhängig voneinander oder synchron zueinander verstellt und angetrieben sein.

In dem gezeigten Ausführungsbeispiel sind die drei Spannbacken 6, 7 und 8 in einer Winkelposition von 120° zueinander an dem Grundkörper 4 angeordnet. Zwischen zwei benachbarten Spannbacken 6, 7 oder 8 ist jeweils zentriert eine der Zentriereinrichtungen 11 vorgesehen, so dass diese zueinander ebenso eine Winkelposition von 120° einnehmen und die drei Spannbacken 6, 7 und 8 zu den drei Zentriereinrichtungen 11 in einem Winkel von 60° angeordnet sind.

Durch die spanabhebende Bearbeitung an dem Werkstück 2 ist dessen Eigengewicht verringert, so dass sich die geometrischen Einspannsituationen verändern. Die drei Spannbacken 6, 7 und 8 stützen dabei das Werkstück 2 an dem Spannfutter 1 ab. Durch die Zustellung der drei Zentriereinrichtungen 11 ist permanent eine Neupositionierung des Werkstückes 2 bezogen auf die Längsachse 5 des Spannfutters 1 möglich. Die Gewichtsveränderungen des Werkstückes 2 können daher durch die Zentriereinrichtungen 11 ausgeglichen werden, ohne dass die Position der drei Spannbacken 6, 7 und 8 zu verändern ist.

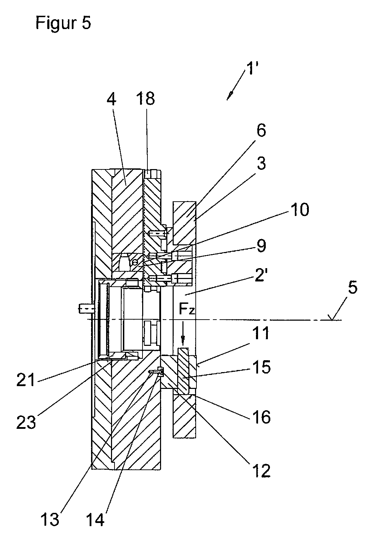

In Figur 5 ist ein Spannfutter 1' dargestellt, durch das ein Werkstück 2' eingespannt ist. Das Werkstück 2' ist dabei als rotationssymetrischer Hohlkörper ausgebildet. Die drei Spannbacken 6, 7 und 8 sind während der Einspannposition im Inneren des Werkstückes 2' angeordnet und üben eine radial nach außen gerichtete Spannkraft auf das Werkstück 2' aus.

Die drei Zentriereinrichtungen 11 sind im Inneren des Werkstückes 2' an dem Spannfutter 1' befestigt, so dass durch diese eine radial nach außen gerichtete Zentrierkraft F_{z} auf das Werkstück 2' einwirkt.

Die Zentrierflächen 16 der drei Zentrierstifte 15 liegen auf der gemeinsamen Kreisbahn 17, deren Radius kleiner bemessen ist als der Innenradius des Werkstückes 2'.

Die jeweilige Zentriereinrichtung 11 ist von außen, beispielsweise mittels eines Werkzeuges, das durch das Werkstück 2' hindurchgeführt werden kann, betätigbar, um die Position der jeweiligen Zentriereinrichtung 11 manuell einzustellen. Es ist auch vorstellbar, dass die jeweilige Zentriereinrichtung 11 mittels der in den Figuren 4a, 4b und 4c erläuterten konstruktiven Ausgestaltungen versehen ist. Die jeweilige Zentriereinrichtung 11 ist beispielsweise mittels der in Figur 4b abgebildeten hydraulischen Antriebseinheit betätigbar, ohne dass das Werkstück 2' zu durchgreifen ist.

## Patentansprüche

1. Kraftbetätigtes Spannfutter (1, 1') für Werkzeugmaschinen zur spanabhebenden Bearbeitung von rotationssymetrischen Werkstücken (2, 2'),
- mit einem an der Werkzeugmaschine befestigbaren Grundkörper (4),
- mit mindestens zwei in dem Grundkörper (4) verschiebbar gehaltenen Spannbacken (6, 7, 8), die synchron gesteuert und radial auf das einzuspannende Werkstück (2, 2') mittels jeweils einer Keilstange (9) bewegbar sind,
- und mit einem in dem Grundkörper (4) axial verschiebbar gehaltenen Betätigungselement (21), das mit jeder der Keilstangen (9) kraftschlüssig verbunden ist und das in dem Grundkörper (4) koaxial zu dessen Längsachse (5) derart gehalten ist, dass zwischen dem Betätigungselement (21) und dem Grundkörper (4) ein vorgegebenes Spiel (23) vorhanden ist,
**dadurch gekennzeichnet,**
- **dass** seitlich versetzt zu einer oder mehreren der Spannbacke (6, 7 oder 8) bzw. Spannbacken (6, 7, 8) jeweils mindestens eine an dem Grundkörper (4) abgestützte Zentriereinrichtung (11) vorgesehen ist,
- **dass** durch jede Zentriereinrichtung (11) eine unmittelbar auf das einzuspannende Werkstück (2, 2') einwirkende radial gerichtete Kraft (F_{z}) einstellbar ist, durch die das Spiel (23) zwischen dem Betätigungselement (21) und dem Grundkörper (4) ausgeglichen werden kann,
- und **dass** die Zentriereinrichtungen (11) gemeinsam synchron oder unabhängig voneinander und/oder unabhängig zu den Spannbacken (6, 7, 8) betätigbar sind.

2. Spannfutter nach Anspruch 1,
**dadurch gekennzeichnet,**
**dass** die Zentriereinrichtungen (11) jeweils eine auf das Werkstück (2) zugewandte Zentrierflächen (16) aufweisen, dass die Zentrierflächen (16) der Zentriereinrichtungen (11) auf einer gemeinsamen Kreisbahn (17) angeordnet sind, die einen größeren Radius als der Außenradius des Werkstückes (2) aufweist und dass die Zentrierfläche (16) mittels eines Zentrierstiftes (15) relativ zu der Zentriereinrichtung (11) bewegbar ist.

3. Spannfutter nach Anspruch 1, zum Spannen von Hohlkörpern,
**dadurch gekennzeichnet,**
**dass** die Spannbacken von außen oder von innen auf dem Werkstück (2') anlieger können, dass die Zentriereinrichtung (11) eine Radialkraft (F_{z}) auf die Innenfläche des Werkstückes (2') ausüben können und dass die Zentriereinrichtungen (11) durch das Werkstück (2') zu deren Betätigung zugänglich sind oder dass die Zentriereinrichtungen (11) elektrisch, hydraulisch oder pneumatisch von außen bewegbar sind.

4. Spannfutter nach Anspruch 3,
**dadurch gekennzeichnet,**
**dass** die Zentriereinrichtungen (11) eine Zentrierfläche (16) aufweisen, die auf einer gemeinsamen Kreisbahn (17) angeordnet sind, die einen kleineren Radius als der Innenradius des Werkstückes (2') aufweist.

5. Spannfutter nach Anspruch 2,
**dadurch gekennzeichnet,**
**dass** die Zentriereinrichtung (11) aus einem Gehäuse (12) besteht und dass das Gehäuse (12) an dem Grundkörper (4) lösbar angebracht ist und dass das Gehäuse (12) in unterschiedliche Winkelpositionen und/oder in verschiedenartige Abstandslagen bezogen auf die Längsachse (5) des Grundkörpers (4) an diesem anbringbar ist.

6. Spannfutter nach Anspruch 2,
**dadurch gekennzeichnet,**
**dass** der Zentrierstift (15) mit einem Keil (31) zusammenwirkt und dass der Keil (31) eine Spannfläche (32) aufweist, durch die beim Einschieben des Keils (31) eine radial gerichtete Zentrierkraft (F_{z}) entsteht, die auf den Zentrierstift (15) einwirkt.

7. Spannfutter nach Anspruch 2,
**dadurch gekennzeichnet,**
**dass** der Zentrierstift (15) als Gewindespindel (36) ausgebildet ist, die radial in einem in dem Gehäuse (12) der Zentriereinrichtung (11) eingearbeiteten Innengewinde (35) angeordnet ist und relativ zu dem Gehäuse (12) bewegbar ist.

8. Spannfutter nach Anspruch 2,
**dadurch gekennzeichnet,**
**dass** der Zentrierstift (15) mittels eines hydraulisch oder pneumatisch angetriebenen Kolbens (33) betätigbar ist.

## Claims

1. A power-operated chuck (1, 1') for machine stools for machining of rotationally symmetrical workpieces (2, 2') involving cutting,
- with a base body (4) that can be attached to the machine tool,
- with at least two camping jaws (6, 7, 8) held in a movable arrangement in the base body (4) which are synchronously controlled and can be moved radially unto the workpiece (2, 2') that is to be clamped by means of one wedge rod (9) each,
- and with an actuating element (21) held in an axially movable arrangement in the base body (4), with the actuating element (21) connected in a force-locking arrangement with each of the wedge rods (9) and held coaxially in the base body (4) in relation to its longitudinal axis (5), that there is a given play (23) between the actuating element (21) and the base body (4),
**characterised in that,**
- at least one centering device (11) supported on the base body (4) is provided laterally offset to one of the clamping jaws (6, 7 or 8) or to more than one clamping jaw (6, 7, 8),
- that each centring device (11) exerts a radially vectored force (F_{z}) acting directly on the workpiece (2, 2') to be clamped, which can be adjusted, by means of which the play (23) between the actuating element (21) and the base body (4) can be compensated,
- and that the centring devices (11) can be actuated jointly synchronously or independently from one another and/or independently from the camping jaws (6, 7, 8).

2. The chuck in accordance with Claim 1,
**characterised in that,**
each of the centring devices (11) has centring surfaces (16) directed towards the workpiece (2), that the centring surfaces (16) of the centring devices (11) are arranged in a common arc (17) which has a larger radius than the outside radius of the workpiece (2), and that the centring surface (16) can be moved relative to the centring device (11) by means of a centering pin (15).

3. The chuck in accordance with Claim 1 for clamping hollow bodies,
**characterised in that,**
the clamping jaws can make contact with the workpiece (2') from the outside or the inside, that the centring devices (11) can exert a radial force (F_{z}) on the inside of the workpiece (2') and that the centring devices (11) can be accessed through the workpiece (2') in order to be accessed, or that the centring devices (11) can be moved electrically, hydraulically or pneumatically the outside.

4. The chuck in accordance with Claim 3,
**characterised in that,**
the centring devices (11) have centring surfaces (16) which are arranged on a common arc (17) which has a smaller radius that the inside radius of the workpiece (2').

5. The chuck in accordance with Claim 2,
**characterised in that,**
the centring device (11) consists of a housing (12) and that the housing (12) is attached to the base body (4) in a releasable convection and that the housing (12) can be attached to the base body (4) in different angular positions and/or in different kinds of spacing positions in relation two the longitudinal axis (5) of the base body (4).

6. The chuck in accordance with Claim 2,
**characterised in that,**
the centering pin (15) acts in conjunction with a wedge (31) and that the wedge (31) has a clamping surface (32) by means of which a radially vectored centering force (F_{z}) results when the wedge (31) is pushed in, and this centring force (F_{z}) acts on the centering pin (15).

7. The chuck in accordance with Claim 2,
**characterised in that,**
the centering pin (15) is configured as a threaded spindle (36) which is radially arranged in a female thread (35) worked into the housing (12) of the centring device (11) and can be moved relative to the housing (12).

8. The chuck in accordance with Claim 2,
**characterised in that,**
the centring pin (15) can be actuated by means of a hydraulically or pneumatically driven piston (33).

## Revendications

1. Mandrin de serrage motorisé (1, 1') pour machines-outils servant au traitement par tournage de pièces à usiner à symétrie de révolution (2, 2'),
- comprenant un corps de base (4) se laissant fixer sur la machine-outil,
- comprenant au moins deux mandrins de serrage synchronisées (6, 7, 8) retenus de manière déplaçable dans le corps de base (4) qui se laissent avancer respectivement par une crémaillère (9) vers la pièce à usiner (2, 2') à serrer,
- et avec un élément d'actionnement (21) retenu de manière axialement déplaçable dans le corps de base (4) qui est lié à entraînement par adhérence avec chacune des crémaillères (9) et qui est retenu dans le corps de base (4) en direction coaxiale par rapport à son axe longitudinal (5) de sorte qu'il y ait entre l'élément d'actionnement (21) et le corps de base (4) un jeu déterminé (23),
**caractérisé en ce que**
- déplacé latéralement par rapport à un mandrin de serrage (6, 7 ou 8) ou à plusieurs des mandarins de serrage (6, 7, 8), il est prévu respectivement au moins un équipement de centrage (11) appuyé sur le corps de base (4),
- que par chaque équipement de centrage (11), il peut être réglé une force radiale (F_{z}) agissant directement sur la pièce à usinier (2, 2') à serrer et qui permet d'équilibrer le jeu (23) entre l'élément d'actionnement (21) et le corps de base (4),
- et que les équipements de centrage (11) se laissent actionner synchronisées ensemble ou indépendamment et/ou indépendant des mandarins de serrage (6, 7, 8).

2. Mandrin de serrage d'après la revendication 1,
**caractérisé en ce que**
les équipements de serrage (11) comportent respectivement une face de centrage (16) donnant sur la pièce à usiner (2), que les faces de centrage (16) des équipements de serrage (11) sont disposées sur une orbite commune (17) dont le rayon est plus grand que le rayon extérieur de la pièce à usiner (2) et que moyennent un goujon de centrage (15), la face de centrage (16) se laisse déplacer relativement par rapport à l'équipement de centrage (11).

3. Mandrin de serrage d'après la revendication 1, pour le serrage de corps creux,
**caractérisé en ce que**
les mors de serrage peuvent porter de l'extérieur ou de l'intérieur sur la pièce à usine (2'), que l'équipement de serrage (11) peut exercer une force radiale (F_{z}) sur la face intérieure de la pièce à usiner (2') et qu'en vue de leur actionnement, les équipements de centrage (11) sont accessibles à travers la pièce à usiner (2') et que les équipements de centrage (11) se laissent mouroir de manière électrique, hydraulique ou pneumatique de l'extérieur.

4. Mandrin de serrage d'après la revendication 3,
**caractérisé en ce que**
les équipements de centrage (11) comportent une face de centrage (16) disposée sur une orbite commune dont le rayon est plus petit que le rayon intérieur de la pièce à usiner (2').

5. Mandrin de serrage d'après la revendication 2,
**caractérisé en ce que**
l'équipement de centrage (11) consiste en un boîtier (12) et que le boîtier (12) est préau de manière démontrable sur le corps de base (4), et que le boîtier (12) se laisse monter en diverses positions angulaires et/ou à diverses distances par rapport à l'axe longitudinal (5) du corps de base (4) sur celui-ci.

6. Mandrin de serrage d'après la revendication 2,
**caractérisé en ce que**
le goujon de centrage (15) collabore avec un coin (31) et que le coin (31) comporte une face de serrage (32) qui, à l'insertion du coin (31), crée une force de centrage radiale (F_{z}) agissant sur le goujon de centrage (15).

7. Mandrin de serrage d'après la revendication 2,
**caractérisé en ce que**
le goujon de centrage (15) est conçu sous la fourme d'une broche filetée (36) disposée en direction radiale dans un taraudage (35) pratiqué dans le boîtier (12) de l'équipement de centrage (11) et qui se laisse déplacer relativement par rapport au boîtier (12).

8. Mandrin de serrage d'après la revendication 2,
**caractérisé en ce que**
le goujon de centrage (15) se laisse actionner à l'aide d'un piston (33) à entraînement hydraulique ou pneumatique.
